# EUROPÄISCHE PATENTSCHRIFT

(11) **EP 3 521 859 B1**
(45) Veröffentlichungstag und Bekanntmachung des Hinweises auf die Patenterteilung: **05.08.2020**
(21) Anmeldenummer: 18213050.0
(22) Anmeldetag: 17.12.2018
(51) Int. Cl.: G01S 17/48, G01S 7/497

(54) **TRIANGULATIONSLICHTTASTER**
TRIANGULATION LIGHT BUTTON
CAPTEUR PHOTOÉLECTRIQUE TRIGONOMÉTRIQUE

(30) Priorität: 02.02.2018 DE 102018102402
(43) Veröffentlichungstag der Anmeldung: 07.08.2019
(73) Patentinhaber: SICK AG, 79183 Waldkirch (DE)
(72) Erfinder: Waslowski, Kai, 79183 Waldkirch (DE)

(56) Entgegenhaltungen:
- EP-A1- 2 199 999
- EP-A1- 2 637 036
- EP-A1- 3 091 272
- DE-C5-102006 032 113
- DE-U1-202014 005 508

## Beschreibung

Die vorliegende Erfindung betrifft einen Triangulationslichttaster nach dem Oberbegriff von Anspruch 1.

Es ist bekannt, die Anwesenheit und/oder Entfernung von Gegenständen in einem Überwachungsbereich mit Lichttastern zu bestimmen, die nach dem Triangulationsprinzip arbeiten. Ein derartiger Triangulationstaster umfasst einen Lichtsender, beispielsweise eine Leuchtdiode oder einen Laser, und gegebenenfalls eine Sendeoptik, um einen Sendelichtstrahl in eine Detektionszone zu einem dort ggf. befindlichen, zu detektierenden Objekt auszusenden. Das Sendelicht kann von einem solchen Objekt remittiert, d.h. diffus oder spiegelnd reflektiert und von einem Lichtempfänger detektiert werden, der zusammen mit einer Empfangsoptik eine Empfangseinheit bildet. Der Lichtempfänger besteht bei bekannten Lösungen aus wenigstens einer Zeile von fotosensitiven Empfangselementen.

In Abhängigkeit von der Entfernung zwischen dem Triangulationstaster und dem remittierten Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch eine Auswertung einer Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb einer vorbestimmten, auch als Tastweite bezeichnete Grenze liegt. Um insbesondere eine hohe Genauigkeit bei der Entfernungsbestimmung zu erreichen, muss ein solcher Lichtempfänger eine Vielzahl fotosensitiver Empfangselemente aufweisen, die in der Triangulationsrichtung nebeneinander angeordnet sind.

Bei Triangulationslichttastern mit Hintergrundausblendung umfasst der Lichtempfänger wenigstens zwei Empfangselemente, wobei ein sogenanntes Nahelement derart angeordnet ist, dass es von einem Lichtstrahl getroffen wird, wenn er von einem Objekt reflektiert wird, das sich innerhalb eines Nahbereichs vor dem Triangulationslichttaster befindet. Der Fernbereich ist dabei definitionsgemäß weiter von dem Triangulationstaster entfernt als der Nahbereich. Zur Signalauswertung wird einer Differenz zwischen den Fotodiodenströmen dieser beiden Bereiche gebildet.

Im Folgenden wird der Aufbau einer Lichtschranke nach dem Stand der Technik für eine industrielle Anwendung beschrieben. Eine Aufgabe ist die Objekterkennung in einem Überwachungsraum bzw. einem Überwachungsbereich. Ein Sendepulsgenerator erzeugt ein periodisches, digitales Ansteuersignal für die Sendestufe. Das Ansteuersignal kann z. B. aus einfachen oder komplexen Pulsmustern bestehen. Die Sendestufe erzeugt aus dem digitalen Ansteuersignal einen zeitlich variierenden Sendestrom. Die Amplitude des Sendestroms ist üblicherweise parametrierbar. Durch die Sendediode erfolgt die Umwandlung von Sendestrom in optische Leistung. Die Sendeoptik beinhaltet einen Sendetubus, Blenden, eine Sendelinse und eine Frontscheibe. Der Überwachungsraum beinhaltet den gesamten zu überwachenden Raum vor dem Sensor und kann das zu detektierende Objekt, ein Hintergrundobjekt, einen Reflektor oder andere, auch störende Objekte wie Spiegel, Lampen oder Fremdlichtquellen enthalten.

Eine Empfängeroptik beinhaltet einen Empfängertubus, Blenden, eine Empfängerlinse und die Frontscheibe. Die Empfängerelemente sind eine Mehrzahl von Fotodioden zur Umwandlung von optischer Leistung in Strom und sind z. B. als Zeile angeordnet. Eine Auswerteschaltung berechnet aus dem zeitlichen Verlauf des Signals der Empfängerelemente und der Kenntnis über die Ansteuersignale der Sendestufe ein Objektfeststellungssignal. Das Objektfeststellungssignal wird über einen physikalischen Schaltausgang ausgegeben.

Wird diese Lichtschranke in der Ausgestaltung eines Lichttasters eingesetzt, so soll erkannt werden, ob sich auf der Sendeachse innerhalb eines zuvor definierten Abstandes ein Objekt befindet, nämlich im Überwachungsbereich. Bei diesem Objekt kann es sich z. B. um eine Person handeln. Wenn sich diese Person innerhalb des Überwachungsbereiches durch die Einwirkung einer Maschine verletzen könnte und die Lichtschranke dieses Risiko durch Abschaltung der Maschine reduzieren soll, dann muss die Sicherheit des Gesamtsystems aus Maschine, Steuerung und Lichtschranke betrachtet werden. Diese Betrachtung wird vereinfacht, wenn die Lichtschranke ihre Funktion selbst überwacht und im Falle eines Fehlers in den sicheren Zustand schaltet.

Der aufgezeigte Stand der Technik hat den Nachteil, dass der gesamte Signalfluss durch den Überwachungsbereich läuft. Es ist daher nicht möglich, die Blöcke Sendestufe, Sendediode, Sendeoptik, Empfangsoptik und Empfängerelemente ohne einen bekannten wohldefinierten Überwachungsbereich zu testen.

Das Problem kann gelöst werden, indem zyklisch ein Referenzobjekt in den Strahlengang eingebracht wird und in diesem Zustand der Block Überwachungsraum wohldefiniert wird. In diesem Betriebszustand können dann z. B. die Ausgangssignale der Empfängerelemente und/oder nachgelagerte Blöcke in der Auswerteschaltung mit Referenzsignalen verglichen werden. Im Falle von Abweichungen wird in einen sicheren Zustand geschaltet.

Nachteil dieser Lösung ist der dafür notwendige Aufwand bei der Entwicklung und Erstellung dieser Lösung und die Reduktion des Maschinendurchsatzes, da ein Teil der produktiven Zeit für Referenzfahrten und Referenzmessung verwendet werden muss.

Die DE 10 2006 032 113 C5 offenbart einen optischen Triangulationssensor zum Nachweis von Objekten nach dem Prinzip der Hintergrundauswertung, insbesondere zum Einsatz im Sicherheitsbereich, mit einer Strahlungsquelle zum Aussenden von Licht, mit einer Sendeoptik zum Leiten des Lichts auf ein nachzuweisendes Objekt und einen Hintergrund, mit einem Nahempfänger zum Nachweis von von dem Objekt reflektiertem Licht, mit einem Fernempfänger zum Nachweis von von dem Hintergrund reflektiertem Licht und mit einer Detektoroptik zum Leiten des von dem Objekt reflektierten Lichts auf den Nahempfänger und zum Leiten des von dem Hintergrund reflektierten Lichts auf den Fernempfänger, dadurch gekennzeichnet, dass zum Testen des Nahempfängers eine Testquelle zum Aussenden von Testlicht vorhanden ist, dass die Testquelle so angeordnet ist, dass das Testlicht sowohl auf den Nahempfänger als auch auf den Fernempfänger trifft, dass eine Geometrie der Anordnung der Testquelle und eine Intensität des Testlichts so gewählt ist, dass durch auf den Nahempfänger und den Fernempfänger auftreffendes Testlicht bei abgeschalteter Strahlungsquelle ein typisches nachzuweisendes Objekt simulierbar ist und dass zum Auswerten der vom Nahempfänger und vom Fernempfänger im Messbetrieb oder im Testbetrieb nachgewiesenen Intensitäten und zum Steuern und Auswerten von Tests eine Auswerte- und eine Steuereinheit vorhanden ist, die mit der Strahlungsquelle, der Testquelle, dem Nahempfänger und dem Fernempfänger verbunden ist.

Die EP 2 199 999 A1 offenbart ein Verfahren zum Testen eines optischen Sensors zum Nachweis von Objekten in einem Überwachungsbereich, mit einer Sendeeinheit zum Strahlen von Sendelicht in den Überwachungsbereich, mit einer Empfangseinheit zum Nachweis von aus dem Überwachungsbereich zurückgestrahltem Licht, wobei die Empfangseinheit mindestens einen Detektor mit einer Mehrzahl von Detektorsegmenten aufweist, mit einer Steuer- und Auswerteeinheit zum Ansteuern der Sendeeinheit, zum Auswerten von von der Empfangseinheit nachgewiesenen Messsignalen und zum Abgeben von Schaltsignalen an eine angeschlossene Einrichtung, bei dem die einzelnen Detektorsegmente getestet werden, indem Testlicht auf die Detektorsegmente gestrahlt, eine Reaktion der Detektorsegmente ausgewertet und in Abhängigkeit dieser Auswertung ein Fehlersignal abgegeben wird, wobei räumlich benachbarte Detektorsegmente jeweils mit Intensitäten des Testlichts bestrahlt werden, die zum messtechnischen Unterscheiden der Reaktionen von räumlich benachbarten Detektorsegmenten bei ordnungsgemäßer Funktion der Detektorsegmente hinreichend unterschiedlich gewählt sind und dass Reaktionen der einzelnen Detektorsegmente auf die Bestrahlung mit Testlicht einzeln und im Vergleich mit Reaktionen von räumlich benachbarten Detektorsegmenten ausgewertet werden.

Die EP 2 637 036 A1 offenbart ein Vorsatzmodul zum Aufsetzen auf einen optischen Sensor oder auf dessen eine Sendeeinheit umfassenden Teil, wobei der optische Sensor eine Sendeeinheit zum Aussenden von Detektionslicht in einen Detektionsbereich, einen Empfänger zum Empfangen von aus dem Detektionsbereich zurückreflektiertem oder zurückremittiertem Licht oder durch den Detektionsbereich transmittiertem Licht und eine Auswerteeinheit zum Auswerten des empfangenen Lichtes aufweist, wobei das Vorsatzmodul folgendes aufweist: Ein Gehäuse mit einer Eintrittsöffnung für den Eintritt wenigstens eines Teiles des Detektionslichts in das Vorsatzmodul, ein Testlichtempfänger zum Empfang und zur Leistungsmessung von als Testlicht auf den Testlichtempfänger fallendem Detektionslicht, und eine Signalausgabeeinrichtung zur Ausgabe eines mit der Testlichtleistung korrelierten Ausgangssignals.

Die EP 3 091 272 A1 offenbart Lichtgitter nach dem Lichtlaufzeitprinzip mit mindestens einem Lichtsender, der Lichtsignale in einen Messbereich aussendet und mit mindestens einem Lichtempfänger, welcher die aus dem Messbereich zurückgeworfenen Lichtsignale aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtsignals ein für den Abstand von Objekten zum Lichtgitter repräsentatives Abstandssignal ermittelt, wobei der Lichtempfänger mindestens eine Einzelphotonenlawinendiode aufweist.
Die DE 20 2014 005 508 U1 offenbart eine Entfernungsmessvorrichtung mit zumindest einer Entfernungsmesseinheit, insbesondere zur berührungslosen Entfernungsmessung, die zumindest eine Sendevorrichtung zum Aussenden von Referenz- und Messstrahlung sowie zumindest eine Sensorvorrichtung zum Detektieren von Referenz- und Messstrahlung aufweist, dadurch gekennzeichnet, dass die Referenzstrahlung als zumindest ein Teilstrahlenbündel einer von der Sendevorrichtung ausgesendeten divergenten Strahlung ausgebildet ist.
Eine Aufgabe der Erfindung besteht darin, einen sicheren Triangulationslichttaster im Sinne von Maschinensicherheit bereitzustellen.

Die Aufgabe wird gemäß Anspruch 1 gelöst durch einen Triangulationslichttaster mit einem ersten Lichtsender zum Aussenden von Sendelicht in eine Detektionszone, wobei dem Lichtsender eine Sendeoptik, insbesondere eine Linse vorgeordnet ist, einem ein Array von Empfangselementen aufweisenden ersten Lichtempfänger zum Empfangen von Licht aus der Detektionszone, welches von einem zu detektierenden Objekt remittiert wird, wobei die Empfangselemente jeweilige Empfangssignale erzeugen, einer im Strahlengang zwischen Detektionszone und erstem Lichtempfänger angeordneten Empfangsoptik zum Erzeugen eines Lichtfleckes aus dem remittierten Licht auf dem ersten Lichtempfänger, wobei sich die Position des Lichtfleckes auf dem ersten Lichtempfänger in der Triangulationsrichtung in Abhängigkeit von der Entfernung des Objektes ergibt, und eine Steuer- und Auswerteeinheit zum Erzeugen eines Erfassungssignals aus den Empfangssignalen auf der Grundlage der Position des Lichtfleckes auf dem ersten Lichtempfänger, wobei ein weiterer zweiter Lichtsender als Referenzlichtsender (14) zur sicherheitsgerichteten Selbsttestung vorgesehen ist.

Bei dem Triangulationslichttaster handelt es sich um einen Sicherheitssensor. Ein Sicherheitssensor soll einen möglichst hohen Sicherheits-Integritätslevel (SIL) gemäß IEC 61508/IEC 61511 aufweisen. Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau der Steuer- und Auswerteeinheit zur Fehleraufdeckung und zur Funktionsprüfung gewährleistet. Der abstandsmessende Triangulationslichttaster bzw. Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der Triangulationslichttaster bzw. Distanzsensor über eine Sensortestung. Der vorliegende Triangulationslichttaster weist eine Selbstüberwachung auf durch interne Referenzpfade.

Die Steuer- und Auswerteeinheit erkennt Objekte in der Detektionszone bzw. Schutzfeldverletzungen durch ein Objekt oder eine Person und kann ein sicherheitsgerichtetes Abschaltsignal ausgeben, um eine gefahrbringende Bewegung einer Maschine oder eines Fahrzeugs oder eines Teils einer Maschine zu stoppen bzw. die Maschine, das Teil der Maschine oder das Fahrzeug abzubremsen. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Gemäß der Erfindung ist ein zweiter Lichtsender als Referenzlichtsender zur sicherheitsgerichteten Selbsttestung vorgesehen. Der Referenzlichtsender kann zur Testung des Lichtempfängers neben dem Lichtempfänger integriert werden. Hierdurch kann eine Testung des Empfangskanals auf das Zeitverhalten bzw. Timing sowie signalhöhenabhängige Effekte durchgeführt werden. Der Referenzlichtsender ist hier bevorzugt nahe am Lichtempfänger angebracht und beleuchtet den Lichtempfänger.

Aufgrund der räumlichen Nähe lässt sich der zusätzliche Referenzlichtsender mit einem leistungsschwächeren und damit kostengünstigeren Lichtsender realisieren. Die Sendeleistung des Referenzlichtsenders wird beispielsweise so eingestellt, dass die Signalhöhe den tatsächlichen Empfangssignalen des Lichtempfängers entspricht. Gleiches gilt für den zeitlichen Verlauf des Sendesignals des Referenzlichtsenders.

Zur Testung des Lichtempfängers können optische Lichtstärken mit unterschiedlichen Intensitätsverläufen bzw. Amplituden verwendet werden. Insbesondere Übersteuerungsmessungen lassen sich auf diese Art leicht durchführen.

Über eine einstellbare Signalhöhe des Referenzlichtsenders lässt sich die Dynamik des Lichtempfängers testen. Der Referenzlichtsender lässt sich mit einer leistungsschwächeren und damit kostengünstigeren Sendediode aufbauen, da aufgrund der räumlichen Nähe eine geringere Sendeleistung ausreicht, um vergleichbare Signale auf dem Empfänger zu erzeugen.

Durch die Messung der Signalhöhe mit unterschiedlichen Referenzamplituden kann die Dynamik und die Sensitivität des Lichtempfängers überprüft werden. Die Messungen können auch zur Kompensation von Alterungseffekten oder Degradation oder zur Kompensation von Temperatureffekten verwendet werden. Im Lichttaster werden hierfür beispielsweise zusätzliche Referenzziele angeordnet und die entsprechenden Messsignale zyklisch einmal gemessen.

Weiter können alle Empfangselemente des Lichtempfängers getestet werden, da alle Empfangselemente mit dem Licht des Referenzlichtsenders beaufschlagt werden können.

Es sind eine Vielzahl von Empfangselementen vorgesehen. Die Empfangselemente sind gruppenweise an jeweils einen Multiplexer angeschlossen. Es sind mehrere Mulitplexer, beispielsweise sechs Multiplexer vorgesehen, wobei jeder Multiplexer an den Eingängen eine Gruppe von Empfangselementen aufweist und der Ausgang des Multiplexers einem Strom/Spannungswandler bzw. einem Transimpedanzverstärker zugeführt ist. Die Ausgänge der Strom/Spannungswandler sind jeweils auf einen Analog/Digital-Wandler geführt. Die Ausgänge der Analog/Digital-Wandler sind auf digitale Filter, insbesondere Filter mit endlicher Impulsantwort, kurz FIR-Filter geführt.

Das Charakteristikum von FIR-Filtern ist, dass sie eine Impulsantwort mit endlicher Länge garantieren. Das bedeutet, FIR-Filter können, egal wie die Filterparameter gewählt werden, niemals instabil werden oder zu einer selbständigen Schwingung angeregt werden. Die Signale der Filter werden der Steuer- und Auswerteeinheit zugeführt. Die Steuer- und Auswerteeinheit ist weiter mit dem Lichtsender und dem Referenzlichtsender verbunden um diese anzusteuern.

Gemäß der Erfindung ist ein erster Spiegel angeordnet, um die Lichtstrahlen des Referenzlichtsenders auf den ersten Lichtempfänger zu lenken. Dadurch können der Referenzlichtsender und der Lichtempfänger auf einer Seite angeordnet werden und es ist lediglich ein passiver Spiegel als Umlenkelement notwendig. Der Spiegel kann in das Gehäuse des Triangulationslichttasters integriert sein. Bei dem Spiegel kann es sich damit um eine einfache spiegelnde Fläche des Gehäuses handeln.

Gemäß der Erfindung ist ein weiterer zweiter Lichtempfänger als Referenzlichtempfänger als zweiter Empfangskanal zur sicherheitsgerichteten Selbsttestung vorgesehen.
Der Referenzlichtempfänger ist neben dem Lichtsender angeordnet. Der Referenzlichtempfänger kann dabei als Photodiode ausgebildet sein.
Der Referenzlichtempfänger ermöglicht folgende Selbsttestungen zur Funktionsprüfung des Triangulationslichttasters.
Erstens kann über Streulicht innerhalb des Gehäuses des Triangulationslichttasters im Referenzlichtempfänger die Leistung, insbesondere Laserleistung des Lichtsenders in jedem Messzyklus überwacht werden. Große Abweichungen oder ein Ausfall des Lichtsenders können so erkannt werden.
Zweitens kann das genaue Zeitverhalten bzw. Timing des Lichtsenders überwacht werden und eventuell auftretende Offsets können korrigiert werden, z. B. bei Temperatureinflüssen.
Drittens kann in den Phasen, in denen kein Licht ausgesendet wird, an dem Referenzlichtempfänger der Fremdlichtpegel gemessen werden. Das entsprechende Messsignal kann mit dem Signal des Lichtempfängers verglichen werden, wodurch die Sensitivität des Lichtempfängers verifiziert werden und mit optionaler anderer Skalierung zur Überprüfung des nötigen Signal-Rausch-Abstandes im eigentlichen Messkanal herangezogen werden kann.
Zusätzliche Messwerte, welche auf dem Lichtempfänger und dem Referenzlichtempfänger erzeugt werden, erlauben eine sicherheitstechnische Bewertung der Funktionstüchtigkeit.
Eine direkte Messung des Fremdlichtpegels auf dem Lichtempfänger und ggf. auf dem Referenzlichtempfänger ermöglichen eine gute Bestimmung des Signal-Rausch-Verhältnisses und ermöglichen eine sicherheitsgerichtete Empfindlichkeit des Systems.
In Weiterbildung der Erfindung ist ein zweiter Spiegel angeordnet, um die Lichtstrahlen des ersten Lichtsenders auf den Referenzlichtempfänger zu lenken. Dadurch kann der Lichtsender und der Referenzlichtempfänger auf einer Seite angeordnet werden und es ist lediglich ein passiver Spiegel als Umlenkelement notwendig. Der Spiegel kann ebenfalls in das Gehäuse des Triangulationslichttasters integriert sein. Bei dem Spiegel kann es sich damit um eine einfache spiegelnde Fläche des Gehäuses handeln.

Gemäß der Erfindung ist der erste Spiegel und/oder in Weiterbildung der Erfindung der zweite Spiegel ein Hohlspiegel. Im Falle des zweiten Hohlspiegels, der zur Umlenkung von Licht zwischen Lichtsender und Referenzlichtempfänger vorgesehen ist, wird das Licht auf den Referenzlichtempfänger gebündelt.
Im Falle des ersten Hohlspiegels, der zur Umlenkung von Lichtstrahlen zwischen Referenzlichtsenders und Lichtempfänger vorgesehen ist, wird das Licht auf die Empfangselemente aufgeweitet, so dass alle Empfangselemente des Lichtempfängers durch den Referenzlichtsender beleuchtet werden können.

Gemäß der Erfindung sind der erste Lichtempfänger und der Referenzlichtsender in einem ersten Tubus angeordnet, wodurch der Lichtempfänger und der Referenzlichtsender räumlich und optisch zugehörig angeordnet sind, jedoch der Lichtsender optisch außerhalb des ersten Tubus angeordnet ist.

Gemäß der Erfindung sind der erste Lichtsender und der Referenzlichtempfänger in einem zweiten Tubus angeordnet, wodurch der Lichtsender und der Referenzlichtempfänger räumlich und optisch zugehörig angeordnet sind, jedoch der Lichtempfänger optisch außerhalb des zweiten Tubus angeordnet ist.
In Weiterbildung der Erfindung sind der erste Lichtsender und der Referenzlichtsender alternierend aktiviert, wodurch eine gegenseitige Beeinflussung ausgeschlossen ist.
In Weiterbildung der Erfindung ist vor der Sendeoptik und vor der Empfangsoptik eine Frontscheibe angeordnet, wobei das Licht des Referenzlichtsenders auf die Frontscheibe trifft und reflektiertes Licht auf den Lichtempfänger gelangt und/oder dass das Licht des ersten Lichtsenders auf die Frontscheibe trifft und reflektiertes Licht auf den Referenzlichtempfänger trifft.
Dadurch kann eine verschmutzte Frontscheibe des Lichttasters über eine Änderung des Lichts durch Rückstreuung an den Schmutzpartikeln auf der Frontscheibe detektiert werden.
Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen ersten schematisch dargestellten Triangulationslichttaster;
- Figur 2: einen zweiten schematisch dargestellten Triangulationslichttaster.

In den nachfolgenden Figuren sind identische Teile mit identischen Bezugszeichen versehen.

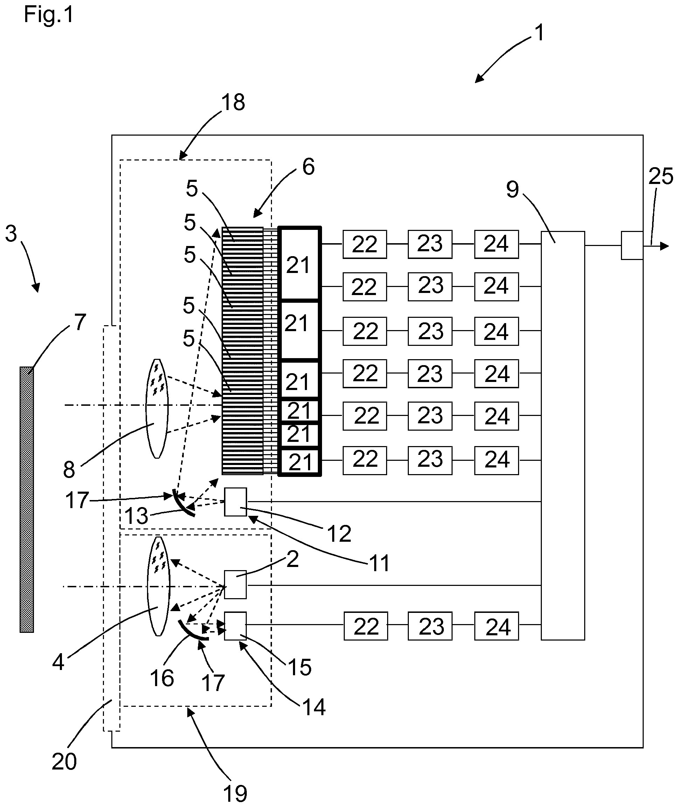

Figur 1 zeigt Triangulationslichttaster 1 mit einem ersten Lichtsender 2 zum Aussenden von Sendelicht in eine Detektionszone 3, wobei dem Lichtsender 2 eine Sendeoptik, insbesondere eine Linse vorgeordnet ist, einem ein Array von Empfangselementen 5 aufweisenden ersten Lichtempfänger 6 zum Empfangen von Licht aus der Detektionszone 3, welches von einem zu detektierenden Objekt 7 remittiert wird, wobei die Empfangselemente 5 jeweilige Empfangssignale erzeugen, einer im Strahlengang zwischen Detektionszone 3 und erstem Lichtempfänger 6 pangeordneten Empfangsoptik 8 zum Erzeugen eines Lichtfleckes aus dem remittierten Licht auf dem ersten Lichtempfänger 6, wobei sich die Position des Lichtfleckes auf dem ersten Lichtempfänger 6 in der Triangulationsrichtung in Abhängigkeit von der Entfernung des Objektes 7 ergibt, und eine Steuer- und Auswerteeinheit 9 zum Erzeugen eines Erfassungssignals aus den Empfangssignalen auf der Grundlage der Position des Lichtfleckes auf dem ersten Lichtempfänger 6, wobei ein weiterer zweiter Lichtsender 11 als Referenzlichtsender 12 zur sicherheitsgerichteten Selbsttestung vorgesehen ist.

Die Sicherheit wird beispielsweise durch einen zweikanaligen oder zweikanalig diversitären Aufbau der Steuer- und Auswerteeinheit 9 zur Fehleraufdeckung und zur Funktionsprüfung gewährleistet.

Die Steuer- und Auswerteeinheit 9 erkennt Objekte 7 in der Detektionszone 3 bzw. Schutzfeldverletzungen durch ein Objekt 7 oder eine Person und kann ein sicherheitsgerichtetes Abschaltsignal bzw. ein Objektfeststellungssignal 25 ausgeben, um eine gefahrbringende Bewegung einer Maschine oder eines Fahrzeugs oder eines Teils einer Maschine zu stoppen bzw. die Maschine, das Teil der Maschine oder das Fahrzeug abzubremsen. Das kann z. B. über sichere Schaltsignale z.B. OSSD-Signale (Output Safety Switching Device-Signale) erfolgen.

Der Referenzlichtsender 12 kann zur Testung des Lichtempfängers 6 neben dem Lichtempfänger 6 integriert werden. Der Referenzlichtsender 12 ist hier bevorzugt nahe am Lichtempfänger 6 angebracht und beleuchtet den Lichtempfänger 6.

Zur Testung des Lichtempfängers 6 können optische Lichtstärken mit unterschiedlichen Intensitätsverläufen bzw. Amplituden verwendet werden.

Über eine einstellbare Signalhöhe des Referenzlichtsenders 12 lässt sich die Dynamik des Lichtempfängers 6 testen.

Durch die Messung der Signalhöhe mit unterschiedlichen Referenzamplituden kann die Dynamik und die Sensitivität des Lichtempfängers 6 überprüft werden.

Es können alle Empfangselemente des Lichtempfängers 6 getestet werden, da alle Empfangselemente mit dem Licht des Referenzlichtsenders 12 beaufschlagt werden können.

Es sind eine Vielzahl von Empfangselementen 5 vorgesehen. Die Empfangselemente 5 sind gruppenweise an jeweils einen Multiplexer 21 angeschlossen. Es sind mehrere Mulitplexer 21, beispielsweise sechs Multiplexer 21 vorgesehen, wobei jeder Multiplexer 21 an den Eingängen eine Gruppe von Empfangselementen 5 aufweist und der Ausgang des Multiplexers 21 einem Strom/Spannungswandler 22 bzw. einem Transimpedanzverstärker zugeführt ist. Die Ausgänge der Strom/Spannungswandler 22 sind jeweils auf einen Analog/Digital-Wandler 23 geführt. Die Ausgänge der Analog/DigitalWandler 23 sind auf digitale Filter, insbesondere Filter mit endlicher Impulsantwort, kurz FIR-Filter 24 geführt.

Die Signale der Filter werden der Steuer- und Auswerteeinheit 9 zugeführt. Die Steuer- und Auswerteeinheit 9 ist weiter mit dem ersten Lichtsender 2 und dem Referenzlichtsender 12 verbunden, um diese anzusteuern.

Gemäß Figur 1 ist ein erster Spiegel 13 angeordnet, um die Lichtstrahlen des Referenzlichtsenders 12 auf den ersten Lichtempfänger 6 zu lenken. Dadurch können der Referenzlichtsender 12 und der Lichtempfänger 6 auf einer Seite angeordnet werden und es ist lediglich ein passiver Spiegel 13 als Umlenkelement notwendig.

Gemäß Figur 1 ist ein zweiter Lichtempfänger 14 als Referenzlichtempfänger 15 als zweiter Empfangskanal zur sicherheitsgerichteten Selbsttestung vorgesehen.

Der Referenzlichtempfänger 15 ist neben dem ersten Lichtsender 2 angeordnet. Der Referenzlichtempfänger 15 kann dabei als Photodiode ausgebildet sein. Der Referenzlichtempfänger 15 ermöglicht eine Selbsttestung zur Funktionsprüfung des Triangulationslichttasters 1.

Gemäß Figur 1 ist ein zweiter Spiegel 16 angeordnet, um die Lichtstrahlen des ersten Lichtsenders 2 auf den Referenzlichtempfänger 15 zu lenken.

Gemäß Figur 1 ist der erste Spiegel 13 und der zweite Spiegel 16 ein Hohlspiegel 17. Im Falle des zweiten Hohlspiegels 17, der zur Umlenkung von Licht zwischen Lichtsender 2 und Referenzlichtempfänger 15 vorgesehen ist, wird das Licht auf den Referenzlichtempfänger 15 gebündelt.

Im Falle des ersten Hohlspiegels 17, der zur Umlenkung von Lichtstrahlen zwischen Referenzlichtsenders 12 und Lichtempfänger 6 vorgesehen ist, wird das Licht auf die Empfangselemente 5 aufgeweitet, so dass alle Empfangselemente 5 des Lichtempfängers 6 durch den Referenzlichtsender 12 beleuchtet werden können.

Gemäß Figur 1 sind der erste Lichtempfänger 6 und der Referenzlichtsender 12 in einem ersten Tubus 18 angeordnet, wodurch der Lichtempfänger 6 und der Referenzlichtsender 12 räumlich und optisch zugehörig angeordnet sind, jedoch der erste Lichtsender 2 optisch außerhalb des ersten Tubus 18 angeordnet ist.

Gemäß Figur 1 sind der erste Lichtsender 2 und der Referenzlichtempfänger 15 in einem zweiten Tubus 19 angeordnet, wodurch der Lichtsender 2 und der Referenzlichtempfänger 15 räumlich und optisch zugehörig angeordnet sind, jedoch der Lichtempfänger 6 optisch außerhalb des zweiten Tubus 19 angeordnet ist.

Gemäß Figur 1 sind der erste Lichtsender 2 und der Referenzlichtsender 12 alternierend aktiviert, wodurch eine gegenseitige Beeinflussung ausgeschlossen ist.

Gemäß Figur 1 ist vor der Sendeoptik 4 und vor der Empfangsoptik 8 eine Frontscheibe 20 angeordnet, wobei das Licht des Referenzlichtsenders 12 auf die Frontscheibe 20 trifft und reflektiertes Licht auf den Lichtempfänger 6 gelangt und/oder dass das Licht des ersten Lichtsenders 2 auf die Frontscheibe 20 trifft und reflektiertes Licht auf den Referenzlichtempfänger 15 trifft.

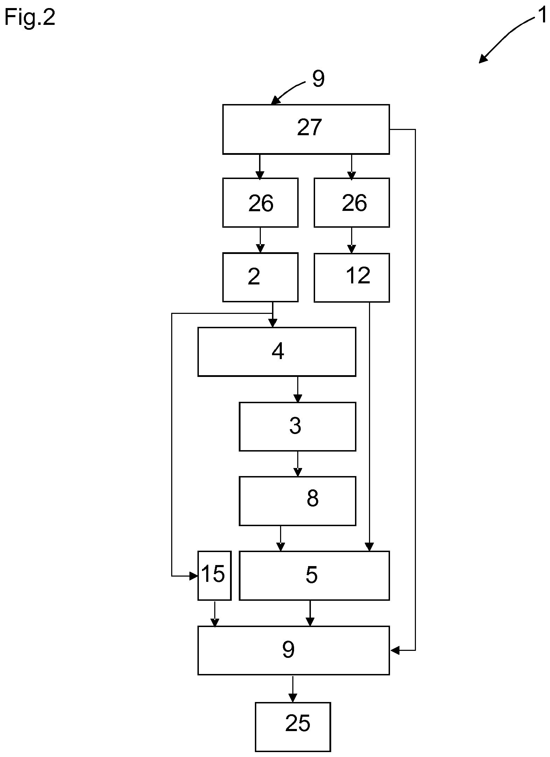

Figur 2 zeigt den Triangulationslichttaster in einer schematisierten Darstellung zur Bildung eines Objektfeststellungssignals 25. Ein Sendepulsgenerator 27, welcher Teil der Steuer- und Auswerteeinheit 9 ist, steuert über die Sendestufen 26 jeweils den ersten Lichtsender 2 und den Referenzlichtsender 12 an. Das Licht des Referenzlichtempfängers 15 gelangt direkt auf die Empfangselemente 5. Das Licht des ersten Lichtsenders 2 gelangt direkt auf den Referenzlichtempfänger 15. Der Referenzlichtempfänger 15 und die Empfangselemente sind über elektronische Stufen mit der Steuer- und Auswerteeinheit 9 verbunden, welche das Objektfeststellungssignal 25 generiert. Das Licht des ersten Lichtsenders 2 gelangt über die Sendeoptik 4 in die Detektionszone 3 und von dort über ein Objekt auf die Empfangsoptik 8 und anschließend auf die Empfangselemente 5.

### Bezugszeichen:

- 1: Triangulationslichttaster
- 2: erster Lichtsender
- 3: Detektionszone
- 4: Sendeoptik
- 5: Empfangselemente
- 6: erster Lichtempfänger
- 7: Objekt
- 8: Empfangsoptik
- 9: Steuer- und Auswerteeinheit
- 11: zweiter Lichtsender
- 12: Referenzlichtsender
- 13: erster Spiegel
- 14: zweiter Lichtempfänger
- 15: Referenzlichtempfänger
- 16: zweiter Spiegel
- 17: Hohlspiegel
- 18: erster Tubus
- 19: zweiter Tubus
- 20: Frontscheibe
- 21: Multiplexer
- 22: Strom/Spannungswandler
- 23: Analog/Digital-Wandler
- 24: FIR-Filter
- 25: Objektfeststellungssignal
- 26: Sendestufe
- 27: Sendpulsgenerator

## Patentansprüche

1. Triangulationslichttaster (1) mit
einem ersten Lichtsender (2) zum Aussenden von Sendelicht in eine Detektionszone (3), wobei dem Lichtsender (2) eine Sendeoptik (4), insbesondere eine Linse vorgeordnet ist,
einem ein Array von Empfangselementen (5) aufweisenden ersten Lichtempfänger (6) zum Empfangen von Licht aus der Detektionszone (3), welches von einem zu detektierenden Objekt (7) remittiert wird, wobei die Empfangselemente (5) jeweilige Empfangssignale erzeugen,
einer im Strahlengang zwischen Detektionszone (3) und erstem Lichtempfänger (6) angeordneten Empfangsoptik (8) zum Erzeugen eines Lichtfleckes aus dem remittierten Licht auf dem ersten Lichtempfänger (6), wobei sich die Position des Lichtfleckes auf dem ersten Lichtempfänger (6) in der Triangulationsrichtung in Abhängigkeit von der Entfernung des Objektes (7) ergibt, und einer Steuer- und Auswerteeinheit (9) zum Erzeugen eines Erfassungssignals aus den Empfangssignalen auf der Grundlage der Position des Lichtfleckes auf dem ersten Lichtempfänger (6),
wobei
ein weiterer zweiter Lichtsender (2) als Referenzlichtsender (12) zur sicherheitsgerichteten Selbsttestung vorgesehen ist, wobei ein erster Spiegel (13) angeordnet ist, um die Lichtstrahlen des Referenzlichtsenders (12) auf den ersten Lichtempfänger (6) zu lenken, **dadurch gekennzeichnet, dass** der erste Spiegel (13) ein Hohlspiegel (17) ist, wobei ein weiterer zweiter Lichtempfänger (14) als Referenzlichtempfänger (15) als zweiter Empfangskanal zur sicherheitsgerichteten Selbsttestung vorgesehen ist, wobei der erste Lichtempfänger (6) und der Referenzlichtsender (12) in einem ersten Tubus (18) angeordnet sind und der erste Lichtsender (2) und der Referenzlichtempfänger (15) in einem zweiten Tubus (19) angeordnet sind.

2. Triangulationslichttaster (1) nach Anspruch 1, **dadurch gekennzeichnet, dass** ein zweiter Spiegel (16) angeordnet ist, um die Lichtstrahlen des ersten Lichtsenders (13) auf den Referenzlichtempfänger (15) zu lenken.

3. Triangulationslichttaster (1) nach Anspruch 2, **dadurch gekennzeichnet, dass** der zweite Spiegel (16) ein Hohlspiegel (17) ist.

4. Triangulationslichttaster (1) nach mindestens einem der vorhergehenden Ansprüche, **dadurch gekennzeichnet, dass** der erste Lichtsender (2) und der Referenzlichtsender (12) alternierend aktiviert sind.

5. Triangulationslichttaster (1) nach mindestens einem der vorhergehenden Ansprüche 2 bis 4, **dadurch gekennzeichnet, dass** vor der Sendeoptik (4) und vor der Empfangsoptik (8) eine Frontscheibe (20) angeordnet ist, wobei das Licht des Referenzlichtsenders (12) auf die Frontscheibe (20) trifft und reflektiertes Licht auf den ersten Lichtempfänger (6) gelangt und/oder dass das Licht des ersten Lichtsenders (2) auf die Frontscheibe (20) trifft und reflektiertes Licht auf den Referenzlichtempfänger (15) trifft.

## Claims

1. A triangulation light sensor (1) comprising
a first light transmitter (2) for emitting transmitted light into a detection zone (3), wherein a transmitting optical system (4), in particular a lens, is arranged upstream of the light transmitter (2),
a first light receiver (6) having an array of receiving elements (5) for receiving light from the detection zone (3), which light is remitted by an object (7) to be detected, with the receiving elements (5) generating respective received signals,
a receiving optical system (8) arranged in the beam path between the detection zone (3) and first light receiver (6) for generating a light spot from the remitted light on the first light receiver (6), wherein the position of the light spot on the first light receiver (6) in the triangulation direction is a result of the distance of the object (7), and a control and evaluation unit (9) for generating a detection signal from the received signals on the basis of the position of the light spot on the first light receiver (6),
wherein
a further second light transmitter (2) is provided as a reference light transmitter (12) for safety-related self-testing; wherein a first mirror (13) is arranged in order to direct the light beams of the reference light transmitter (12) onto the first light receiver (6), **characterized in that** the first mirror (13) is a concave mirror (17), with a further second light receiver (14) being provided as a reference light receiver (15) as a second receiving channel and for safety-related self-testing, with the first light receiver (6) and the reference light transmitter (12) being arranged in a first tube (18) and the first light transmitter (2) and the reference light receiver (15) being arranged in a second tube (19).

2. A triangulation light sensor (1) in accordance with claim 1, **characterized in that** a second mirror (16) is arranged in order to direct the light beams of the first light transmitter (13) onto the reference light receiver (15).

3. A triangulation light sensor (1) in accordance with claim 2, **characterized in that** the second mirror (16) is a concave mirror (17).

4. A triangulation light sensor (1) in accordance with at least one of the preceding claims, **characterized in that** that the first light transmitter (2) and the reference light transmitter (12) are activated alternately.

5. A triangulation light sensor (1) in accordance with at least one of the preceding claims 2 to 4, **characterized in that** a front screen (20) is arranged in front of the transmitting optical system (4) and in front of the receiving optical system (8), with the light from the reference light transmitter (12) striking the front screen (20) and reflected light reaching the first light receiver (6); and/or **in that** the light of the first light transmitter (2) strikes the front screen (20) and reflected light strikes the reference light receiver (15).

## Revendications

1. Capteur photoélectrique à triangulation (1) comportant un premier émetteur de lumière (2) pour émettre une lumière d'émission dans une zone de détection (3), une optique d'émission (4), en particulier une lentille, étant disposée en amont de l'émetteur de lumière (2),
un premier récepteur de lumière (6) comprenant un réseau d'éléments de réception (5) pour recevoir la lumière en provenance de la zone de détection (3), qui est réémise par un objet (7) à détecter, les éléments de réception (5) générant des signaux de réception respectifs,
une optique de réception (8) disposée dans le chemin optique entre la zone de détection (3) et le premier récepteur de lumière (6) pour générer une tache lumineuse sur le premier récepteur de lumière (6) à partir de la lumière réémise, la position de la tache lumineuse sur le premier récepteur de lumière (6) dans la direction de triangulation résultant en fonction de la distance de l'objet (7), et
une unité de commande et d'évaluation (9) pour générer un signal de détection à partir des signaux de réception sur la base de la position de la tache lumineuse sur le premier récepteur de lumière (6),
un autre, second émetteur de lumière (2) étant prévu comme émetteur de lumière de référence (12) pour l'autotest de sécurité,
un premier miroir (13) étant disposé pour diriger les faisceaux lumineux de l'émetteur de lumière de référence (12) vers le premier récepteur de lumière (6),
**caractérisé en ce que**
le premier miroir (13) est un miroir creux (17), un autre, second récepteur de lumière (14) étant prévu comme récepteur de lumière de référence (15) à titre de second canal de réception pour l'autotest de sécurité, et
le premier récepteur de lumière (6) et l'émetteur de lumière de référence (12) étant disposés dans un premier tube (18), et le premier émetteur de lumière (2) et le récepteur de lumière de référence (15) étant disposés dans un second tube (19).

2. Capteur photoélectrique à triangulation (1) selon la revendication 1, **caractérisé en ce que** un second miroir (16) est disposé pour diriger les faisceaux lumineux du premier émetteur de lumière (13) vers le récepteur de lumière de référence (15).

3. Capteur photoélectrique à triangulation (1) selon la revendication 2, **caractérisé en ce que** le second miroir (16) est un miroir creux (17).

4. Capteur photoélectrique à triangulation (1) selon l'une au moins des revendications précédentes, **caractérisé en ce que** le premier émetteur de lumière (2) et l'émetteur de lumière de référence (12) sont activés en alternance.

5. Capteur photoélectrique à triangulation (1) selon l'une au moins des revendications précédentes, **caractérisé en ce que** une vitre frontale (20) est disposée devant l'optique d'émission (4) et devant l'optique de réception (8), la lumière de l'émetteur de lumière de référence (12) tombe sur la vitre frontale (20) et la lumière réfléchie parvient sur le premier récepteur de lumière (6) et/ou **en ce que** la lumière du premier émetteur de lumière (2) tombe sur la vitre frontale (20) et la lumière réfléchie tombe sur le récepteur de lumière de référence (15).
